# EUROPÄISCHE PATENTSCHRIFT

(11) **EP 0 597 469 B1**
(45) Veröffentlichungstag und Bekanntmachung des Hinweises auf die Patenterteilung: **17.04.1996**
(21) Anmeldenummer: 93118242.2
(22) Anmeldetag: 11.11.1993
(51) Int. Cl.: B09B 3/00, C08L 95/00

(54) **Verfahren zur Entsorgung von mineralölkontaminierten Böden**
Method of treating soils contaminated by mineral oils
Procédé pour le traitement des sols contaminés par des huiles minérales

(30) Priorität: 13.11.1992 DE 4238309; 30.03.1993 DE 4310339
(43) Veröffentlichungstag der Anmeldung: 18.05.1994
(73) Patentinhaber: DEUTAG AG, D-50679 Köln (DE)
(72) Erfinder: Linxen, Ingolf, D-76571 Gaggenau (DE)
(74) Vertreter: Werner, Hans-Karsten, Dr.

(56) Entgegenhaltungen:
- EP-A- 0 448 335
- WO-A-91/13698
- DE-A- 3 927 443
- CIVIL ENGINEERING Bd. 58, Nr. 12 , 1988 , NEW YORK Seiten 72 - 74 C. CZARNECKI 'Making use of contaminated soil'
- JOURNAL OF THE AIR AND WASTE MANAGEMENT ASSOCIATION Bd. 40, Nr. 10 , Oktober 1990 , PITTSBURGH US Seiten 1436 - 1441 J. HUBBARD 'Site sampling and treatability studies for demonstration of wastechem's asphalt encapsulation technology under EPA's SITE program'

## Beschreibung

Mineralölkontaminierte Böden wurden bisher entsorgt, indem sie entweder in eine Sondermülldeponie verbracht wurden oder versucht wurde, die Ölkontamination zu entfernen. Die Entfernung der Öle erfolgte dabei entweder durch Erhitzen des gesamten Materials auf hohe Temperaturen in sogenannten thermischen Verfahren oder durch Extraktion mit Lösungsmitteln (Bodenwäsche). Ein drittes Verfahren ist die biologische Behandlung mit Mikroorganismen.

Das Erhitzen des gesamten Materials auf hohe Temperaturen ist energetisch und kostenmäßig aufwendig. Die Extraktion mit Lösungsmitteln ist ebenfalls sehr aufwendig und führt darüberhinaus zu ölhaltigen Extrakten, deren Entsorgung wiederum sehr aufwendig und problematisch ist. Die biologische Behandlung ist zeitaufwendig und benötigt große Flächen.

Die EP-A 0 448 335 beschreibt ein Verfahren, bei welchem altes, aufgebrochenes Asphaltmaterial, vermischt mit ölkontaminierten Böden, mit einer Asphaltemulsion beschichtet und erneut in eine Straßendecke eingebaut wird. Hierin wird bei der Würdigung des Standes der Technik ausführlich dargelegt, welche Nachteile und welche Schwierigkeiten zu beachten sind, wenn man versucht, heißen Asphalt zusammen mit mineralölkontaminierten Böden zu verarbeiten.

Die WO 91/13698 beschreibt ein apparativ und verfahrensmäßig sehr aufwendiges System, welches genauestens zeigt, welche Probleme auftreten und bewältigt werden müssen, wenn man versucht, mineralölkontaminierte Böden zu verarbeiten.

Die Erfindung hat sich die Aufgabe gestellt, mineralölkontaminierte Böden einfach, sicher, kostengünstig und umweltfreundlich nicht nur zu entsorgen, sondern zu verwerten und dadurch auch dem Wiederverwendungsgebot nachzukommen.

Diese Aufgabe kann überraschend einfach dadurch gelöst werden, daß diese mineralölkontaminierten Böden verwertet werden, indem man sie im Gemisch mit unbelasteten Mineralstoffen auf 120 bis 200°C erhitzt und mit einem heißen Bindemittel, auf Basis von Bitumen vermischt, zu Asphalt verarbeitet, wobei beim Erhitzen lokale Überhitzungen über 500°C vermieden und die bei der Erhitzung verdampfenden Anteile der Ölkontaminierung einer Verbrennungsanlage zugeführt werden.

Vorzugsweise wird so gearbeitet, daß beim Erhitzen lokale Überhitzungen über 350°C vermieden werden.

Das erfindungsgemäße Verfahren ist insbesondere für solche mineralölkontaminierten Böden geeignet, die überwiegend aus Kies, Sand, Splitten oder Schotter bestehen, so daß sie prinzipiell als Baumaterial für Asphalte geeignet sind. Sie sollten praktisch keine humosen Anteile und nur maximal 5 % bindige Anteile wie Ton, Lehm oder Schluff enthalten. Auch Verunreinigungen durch Holz, Plastik, Papier, etc. sollten hier nicht enthalten sein. Sofern Korngrößen über 45 mm darin enthalten sind, sollten diese durch Aussiebung entfernt und gegebenenfalls nach Brechen auf kleinere Korngrößen dem Verfahren zugeführt werden. Die mineralölkontaminierten Böden sollten weiterhin keine starken zusätzlichen Belastungen durch Schwermetalle, leichtenflammbare Komponenten und halogenierte Kohlenwasserstoffe enthalten, da dies zu Schwierigkeiten beim Antransport und der Zwischenlagerung führen könnte. Insbesondere der Flammpunkt sollte nicht unter 55°C liegen.

Die erfindungsgemäß verwertbaren mineralölkontaminierten Böden werden mit unbelasteten Mineralstoffen vermischt. Diese unbelasteten Mineralstoffe dienen vor allem dazu, dem Gesamtgemisch die für die Asphaltherstellung notwendige Korngrößenverteilung und Materialzusammensetzung zu geben. Darüber hinaus kann bei hochkontaminierten Böden durch die Zumischung von unbelasteten Mineralstoffen der Einfluß auf die endgültigen Eigenschaften der Bindemittel auf Basis von Bitumen so gering gehalten werden, daß die Qualität des endgültigen entstehenden Asphalts nicht beeinträchtigt wird.

Das Gemisch aus mineralölkontaminierten Böden und unbelasteten Mineralstoffen wird erfindungsgemäß auf 120 bis 200°C erhitzt. Vorzugsweise erfolgt die Erhitzung auf 150 bis 170°C. Unter 120°C ist nicht gewährleistet, daß das Material ausreichend getrocknet wird. Außerdem ist es dann nicht mehr problemlos mit heißen Bindemitteln verarbeitbar. Oberhalb von 200°C beginnen bereits Crackprozesse der höher siedenden Anteile der Mineralöle, so daß zusätzlich zu den verdampfenden Anteilen der Ölkontaminierung weitere leicht flüchtige Zersetzungsprodukte der Öle entstehen, deren Beseitigung durch eine Verbrennungsanlage Probleme aufwerfen kann.

Das Verfahren verläuft insbesondere dann optimal, wenn beim Erwärmen lokale Überhitzungen auf Temperaturen über 350°C, insbesondere über 500°C vermieden werden. Dies kann beispielsweise dadurch erfolgen, daß die mineralölkontaminierten Böden gegebenenfalls im Gemisch mit unbelasteten Mineralstoffen nur indirekt beheizt wird. Besonders bewährt hat sich auch die Verwendung einer Brennraumgestaltung gemäß DE 38 15 104.9. In diesen Anlagen sorgen die Einbauten dafür, daß das Material nicht durch die heißesten Zonen der Flamme hindurchfällt und dadurch lokalen Überhitzungen ausgesetzt wird.

Da bei dem erfindungsgemäßen Verfahren ein Teil der Ölkontaminierung verdampft, werden die Öldämpfe einer Verbrennungsanlage zugeführt. Besonders einfach erfolgt dies, wenn der über das zu erhitzende Material hinweg geführte Luftstrom unmittelbar als Verbrennungsluft verwendet wird. Dies ist beispielsweise der Fall in Anlagen gemäß DE 38 15 104.9. Es ist selbstverständlich möglich, diese verdampfenden Anteile auch einer anderen, nicht zur Anlage gehörenden Verbrennungsanlage zuzuführen.

Die erfindungsgemäß erhitzten und getrockneten mineralölkontaminierten Böden, im Gemisch mit unbelasteten Mineralstoffen, werden unmittelbar mit einem heißen Bindemittel auf Basis von Bitumen zu Asphalt verarbeitet. Dies erfolgt üblicherweise in einem Mischer. Die noch an den mineralölkontaminierten Böden anhaftenden, nicht verdampften Anteile führen zu einer guten und raschen Ummantelung des körnigen Materials durch das Bindemittel. Sofern es sich um hochkontaminierte Böden handelt, kann diese Vermischung mit dem Bindemittel dazu führen, daß dessen Eigenschaften in Richtung geringerer Viskosität verschoben werden. Dies kann ohne weiteres durch Verwendung entsprechend höher viskoser Bitumensorten kompensiert werden. Die Untersuchung der erfindungsgemäß entstehenden Asphalte bezüglich der physikalischen und bautechnischen Eigenschaften haben jedoch gezeigt, daß keine Qualitätseinbußen auftreten. Untersuchungen der Elutionswerte haben weiterhin gezeigt, daß auch die Vorschriften der Trinkwasserverordnung ohne weiteres eingehalten werden. Die Eluatwerte lagen weit unter den Grenzwerten und unterschieden sich praktisch nicht von Eluatwerten von Asphalt, welcher ohne Zusatz von mineralölkontaminierten Böden hergestellt wurde. Von entscheidender Bedeutung ist, daß durch Auswahl und Menge der unbelasteten Mineralstoffe eine Korngrößenverteilung des Gesamtgemisches entsteht, die für Asphalt gefordert wird.

Bei der Zuführung der verdampfenden Anteile der Ölkontaminierung in einer Verbrennungsanlage wurden keine erhöhten Emissionen im Reingas gemessen.

Auch der Antransport und die Zwischenlagerung der erfindungsgemäß verwendeten mineralölkontaminierten Böden ist ohne Beeinträchtigung der Umwelt möglich. Vorzugsweise wird für die Zwischenlagerung eine öldichte Wanne verwendet mit einer Verschleißschicht aus Asphalt. Die Platzentwässerung sollte über Ölabscheider erfolgen. Eine Überdachung des Lagerplatzes mit geschlossener Wetterseite oder einer Halle mit Entlüftung sind empfehlenswert. Das angelieferte Material sollte zuvor untersucht sein bezüglich Art und Umfang der Kontaminierung, der Korngrößenverteilung sowie insbesondere bezüglich des Flammpunktes. Sofern diese Voraussetzungen erfüllt sind, läuft die erfindungsgemäße Entsorgung bzw. Wiederverwertung der mineralölkontaminierten Böden problemlos. Die Untersuchungen wurden durchgeführt in einer Anlage mit einer Trockentrommel gemäß DE 38 15 104.9 mit einem Durchmesser von 2,50 m und einer Trommellänge von 10 m mit einem 1300 kg-Brenner. Durch die Abdeckung des Brennraums wird vermieden, daß das Material durch die Heißzonen hindurchfällt. Es wird somit vor zu hohen Temperaturen geschützt. Die Luftzufuhr erfolgt in der Weise, daß die verdampfenden Anteile der Ölkontaminierung mit der Verbrennungsluft abgeführt und der Verbrennung zugeführt werden.

Das erfindungsgemäße Verfahren ist auch gut geeignet, mineralölkontaminierte Böden vor Ort zu entsorgen und wieder zu verwerten. So können beispielsweise mineralölkontaminierte Böden unter und neben Tankstellen sowie aus Erdölraffinerien oder petrochemischen Anlagen zu Asphalt verarbeitet werden und vor Ort zum Verfüllen der durch Ausbaggern entstandenen Löcher verwertet werden. Nach dem Verfüllen der Löcher und Abkühlen kann derartiges Geländer sofort wieder bebaut werden, da es eine hohe mechanische Stabilität aufweist. Für solche Zwecke können dann auch mobile Einheiten zum Einsatz kommen, die vor Ort die mineralölkontaminierten Böden erhitzen, mit heißen Bindemittel mischen und so zu Asphalt verarbeiten. Die bei der Erhitzung verdampfenden Anteile der Ölkontaminierung, insbesondere in Erdölraffinerien oder petrochemischen Anlagen den dort vorhandenen Verbrennungsanlagen zugeführt werden.

Eine weitere Verwertungsmöglichkeit besteht darin, den entstandenen Asphalt nach der Erkalten aufzubrechen und als Granulat an anderen Baustellen mit zu verwerten. Auf alle Fälle ermöglicht das erfindungsgemäße Verfahren die Wiederverwertung der mineralölkontaminierten Böden. Notfalls könnten die entstandenen Granulate aus Asphalt auch in Deponien niedriger Kategorien deponiert werden, d.h. anstelle der Deponieklassen IV bis V wären sie zumindest für die Deponieklassen II bis III geeignet.

## Patentansprüche

1. Verfahren zur Entsorgung von mineralölkontaminierten Böden, bei dem diese zu Asphalt verarbeitet werden, indem man sie thermisch behandelt und im gemisch mit unbelasteten Mineralstoffen mit einem hießen Bindemittel, auf der Basis von Bitumen, vermischt, dadurch gekennzeichnet daß, die mineralölkontaminierten Böden im gemisch mit den unbelasteten Mineralstoffen auf 120 bis 200°C erhitzt werden wobei beim Erhitzen lokale Überhitzungen über 500°C vermieden und die bei der Erhitzung verdampfenden Anteile der Ölkontaminierung einer Verbrennungsanlage zugeführt werden.

## Claims

1. A method for disposal of mineral oil contaminated soils wherein said soils are processed to asphalt by thermal treatment and, in admixture with uncontaminated mineral materials, blending them with a hot bitumen-based binder, characterized in that said mineral oil contaminated soils in admixture with said uncontaminated mineral materials are heated to from 120 to 200°C wherein local overheatings exceeding 500°C are avoided in said heating and the fractions of said oil contamination evaporating in the course of said heating are fed to an incineration plant.

## Revendications

1. Procédé pour la mise en dépôt des sols contaminés par des huiles minérales, dans lequel on transforme ces sols en asphalte en les traitant thermiquement, procédé selon lequel ces sols, mélangés à des matières minérales non contaminées, sont melangés avec un liant chaud à base de bitume,
caractérisé en ce que les sols comtaminés par des huiles minérales, en mélange avec des matières minérales non contaminées, sont chauffés à 120 à 200°C, en évitant lors du chauffage des surchauffes locales à plus de 500°C, et les fractions de la contamination huileuse vaporisées par le chauffage sont envoyées à une installation de combustion.
